# EUROPEAN PATENT APPLICATION

(11) **EP 2 527 071 A1**
(43) Date of publication of application: **28.11.2012**
(21) Application number: 12169549.8
(22) Date of filing: 25.05.2012
(51) Int. Cl.: B23D 51/00, B23D 59/00, B23D 49/16

(54) **Cutting tool with dust preventing device**

(30) Priority: 27.05.2011 JP 2011118907
(71) Applicant: Makita Corporation, Anjo, Aichi 446-8502 (JP)
(72) Inventor: Ogura, Yasushi, Anjo,, Aichi 446-8502 (JP)
(74) Representative: Kramer - Barske - Schmidtchen

(57) **Abstract**

A cutting tool (1) may include an outer housing (11) that receives a motion conversion unit (40) and a drive device (30) therein. A cutting blade (95) may be driven by the drive device (30) via the motion conversion unit (40). A dust preventing device (60) may prevent dust from reaching to the drive motor (30) via a space between the outer housing (11) and the motion conversion unit (40).

## Description

This application claims priority to Japanese patent application serial number 2011-118907, the contents of which are incorporated herein by reference.

Embodiments of the present invention relate to cutting tools, and in particular to cutting tools having a drive motor, a motion conversion mechanism for converting the motion of the drive motor into a given motion of a cutting blade for cutting a workpiece.

Reciprocating saws are known that are used for cutting workpieces, such as wooden workpieces. The reciprocating saws generally include a drive motor and a motion conversion mechanism for converting the rotation of the drive motor into a reciprocating movement of a cutting blade. The motion conversion mechanism may be positioned on the front side or an output side of the drive motor. The cutting blade may be mounted to the front end of the motion conversion mechanism and may extend forwardly with respect to the reciprocating direction. The reciprocating cutting blade may cut a workpiece. This type of reciprocating saw is disclosed, for example, in JP-A-2005-319542.

In general, the motion conversion mechanism includes components disposed within a metal housing. On the outer circumferential side of the metal housing, a resin outer housing may be disposed. It may be preferable that the resin outer housing is extended to also cover the drive motor in order to improve the external appearance.

However, if the resin outer housing is extended to cover the drive motor, it may be possible that cut powder (dust) may reach the drive motor via a space between the metal housing and the resin housing. In such a case, the cut powder may badly influence the drive motor.

Therefore, there has been a need in the art for a cutting tool that includes an outer casing for covering a motion conversion mechanism and a drive motor and that can prevent cut powder or dust from reaching to the drive motor.

In one aspect according to the present teachings, a cutting tool may include an outer housing that receives a motion conversion unit and a drive device therein. A cutting blade may be driven by the drive device via the motion conversion unit. A dust preventing device may prevent dust from reaching to the drive motor from between the outer housing and the motion conversion unit.

Additional objects, features, and advantages, of the present invention will be readily understood after reading the following detailed description together with the claims and the accompanying drawings, in which:
FIG 1 is a side view of a cutting tool;
FIG. 2 is a vertical sectional view of the cutting tool and shown one of halves of the cutting tool split along a vertical plane;
FIG. 3 is a sectional view taken along line III-III in FIG. 1;
FIG. 4 is an enlarged side view, with one of outer housing halves removed, of a portion around a motion conversion unit of the cutting tool;
FIG. 5 is an enlarged view of a part of FIG. 2 showing a dust preventing device;
FIG. 6 is an enlarged view of a part of FIG. 3 showing the dust preventing device; and
FIG. 7 is an enlarged view similar to FIG. 6 but showing an alternative embodiment of the dust preventing device.

Each of the additional features and teachings disclosed above and below may be utilized separately or in conjunction with other features and teachings to provide improved cutting tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

In one example, a cutting tool may include a drive motor having a drive shaft moving in a first motion, a motion conversion unit configured to convert the first motion into a second motion, and a cutting blade coupled to the motion conversion unit, so that the cutting blade moves in the second motion for cutting a workpiece. The motion conversion unit includes a motion conversion assembly and an accommodation housing configured to accommodate at least a part of the motion conversion assembly. The motion conversion unit is arranged on a front side of the drive motor and having length along a direction of the drive shaft. The cutting tool may further include an outer housing disposed on an outer circumferential side of the accommodation housing and configured to receive at least the motion conversion unit and the drive motor therein. A dust preventing device may be disposed between the accommodation housing and the outer housing and configured to prevent dust from reaching to a region of the drive motor from a front side of the motion conversion unit.

Because the outer housing receives at least the motion conversion unit and the drive motor therein, the outer housing is extended to cover the drive motor in addition to the motion conversion mechanism. Therefore, it is possible to provide a unity in appearance to the cutting tool. In addition, because the dust preventing device may be prevent dust from reaching to the region of the motor unit from the front side of the motion conversion unit, it is possible to prevent adverse affect of powder dust to the drive motor.

The cutting tool may further include a power supply switch device disposed on a rear side of the drive motor, and the outer housing may be extended to also receive the power supply switch device. With this arrangement, the outer housing may be extended to also cover the power supply switch device, and therefore, the cutting tool may be further improved in terms of unity in appearance.

The outer housing may include a grip that is disposed at a position on a rear side of the power supply switch device and configured to be grasped by a hand of a user. Therefore, the cutting tool may be further improved in terms of unity in appearance.

The dust preventing device may include at least one rib formed on an inner circumferential surface of the outer housing and protruding toward an outer circumferential surface of the accommodation housing.

Because the at least one rib can be formed integrally with the outer housing, it is possible to easily provide a dust preventing function without a substantial increase in the manufacturing cost. The at least one rib may contact the outer circumferential surface of the accommodation housing or may be spaced therefrom.

The outer housing may be made of resin and may includes housing halves that are joined to each other. For example, the housing halves may have configurations symmetrical with each other, so that the outer housing can be easily manufactured. In addition, the operations for assembling the drive motor and the motion conversion unit, etc., within the outer housing can be easily performed. Eventually, the manufacturing operation of the cutting tool can be easily performed.

The outer housing may include at least one discharge hole formed in the outer housing and communicating between inside and outside thereof, so that dust flowing into the outer housing can be discharged from inside to the outside of the outer housing through the at least one discharge hole. With this arrangement, it is possible to prevent dust (i.e., cut dust or powder dust) from clogging within the front end of the outer housing, and it is also possible to further reliably prevent due from reaching to the region of the drive motor.

The motion conversion unit may include a front surface opposed to a workpiece to be cut, and the front surface may be inclined rearwardly from a central portion toward an outer peripheral portion of the front surface, so that dust flowing into the outer housing can be directed toward the at least one discharge hole. Therefore the dust can be more efficiently discharged from within the front end of the outer housing to the outside.

An elastomeric material layer may be formed on the outer circumferential surface of the outer housing. The elastomeric material layer may include a portion covering a part of the inner circumferential surface of the outer housing, and the at least one rib may be formed by the portion of the elastomeric material layer. The at least one rib formed by the portion of the elastomeric material layer may closely contact the outer circumferential surface of the accommodation surface due to its elastic deformation, so that it is possible to more reliably prevent dust from flowing to the region of the drive motor.

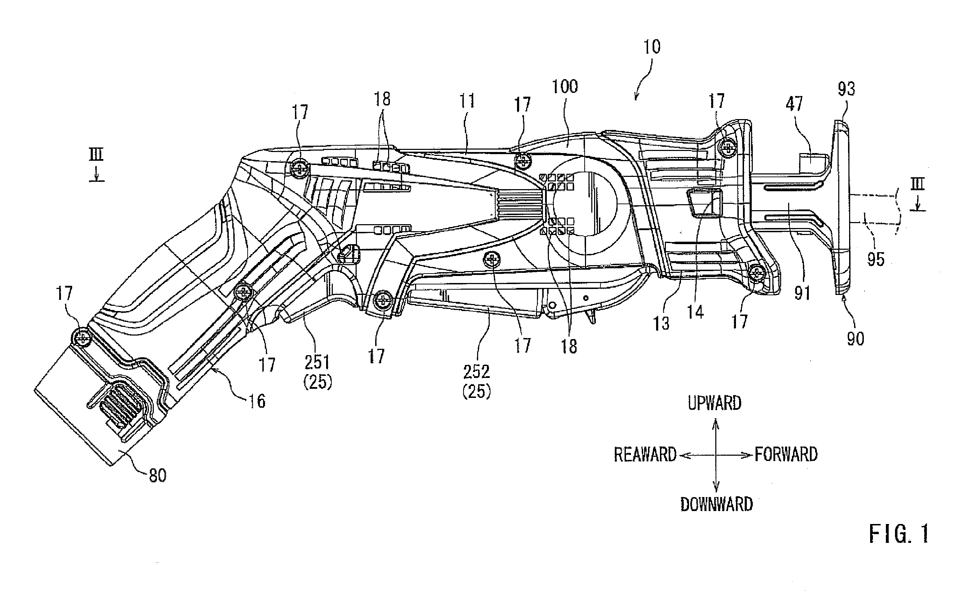

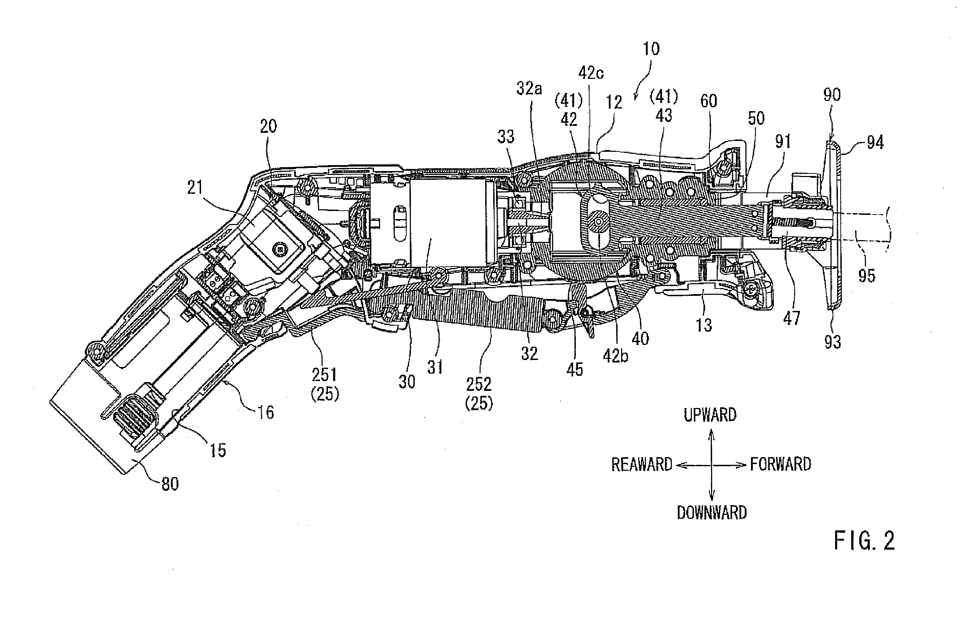

A representative embodiment will now be described with reference to FIGS. 1 to 6. A cutting tool 1 shown in FIGS. 1 and 2 is configured as a reciprocating saw and may be used for cutting workpieces including wooden workpieces. The cutting tool 1 may include a tool body 100 that generally includes a drive motor 30 and a motion conversion unit 40 for converting the rotation of the drive motor 30 into a reciprocating movement of a cutting blade 95. A battery pack 80 having a rechargeable battery, such as a lithium ion battery (not shown), may be mounted to the tool body 100 for supplying a DC power to the drive motor 30. Therefore, the cutting tool 1 is configured as a portable cutting tool. The cutting blade 95 may extend forwardly from the tool body 100, and the battery pack 80 may be mounted to the rear end of the tool body 100. An operation device 25 may be disposed on the lower side of the tool body 100 for operating a power supply switch device 20 that will be described later.

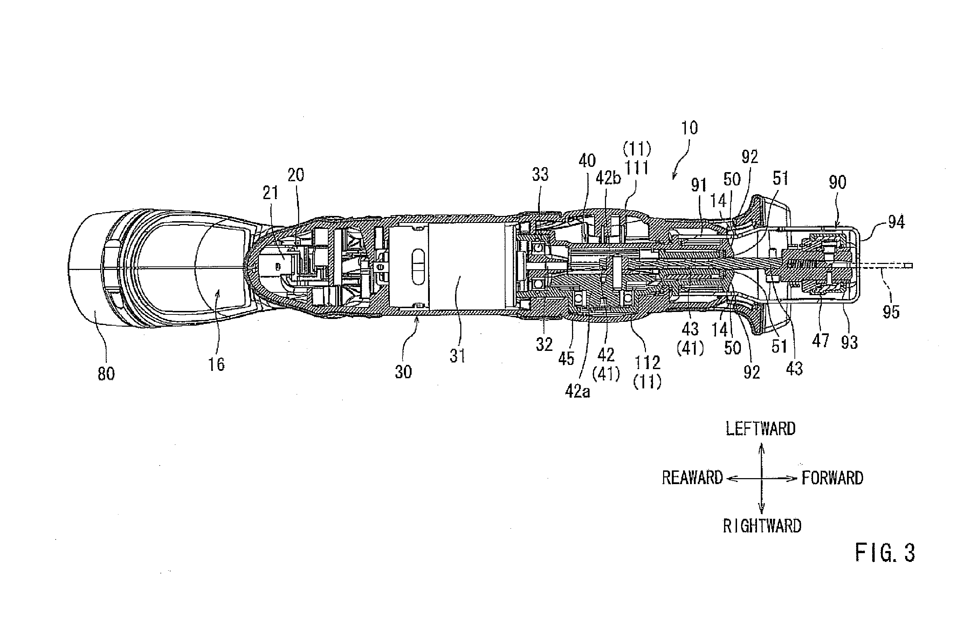

The cutting blade 95 may be attached to the front portion of the motion conversion unit 40 and may be elongated forwardly with respect to the reciprocating direction. More specifically, as shown in FIGS. 2 and 3, the cutting blade 95 may be mounted to a reciprocating rod 43 of the motion conversion unit 40 via a mount device 47. The mount device 47 may be a clamp device for clamping the cutting blade 95 and may be disposed at the front end portion of the reciprocating rod 43. Therefore, the cutting blade 95 can reciprocate together with the reciprocating rod 43 for cutting a workpiece.

As shown in FIGS. 2 and 3, the cutting tool 10 includes an outer housing 11. The outer housing 11 may be a molded product made of plastic resin. The outer housing 11 may have a two-split structure, and therefore, the outer housing 11 may include housing halves or a left outer housing portion 111 and a right outer housing portion 112 that are separated by a vertical plane extending in parallel to the forward and rearward direction. The left and right outer housing portions 111 and 112 may be joined together by means of screws 17 after the drive motor 30, the motion conversion unit 40, etc., have been assembled within these portions 111 and 112. The outer housing 11 may have a configuration bent such that its front and rear ends are turned downward as viewed from the lateral side. As best shown in FIG. 1, a shoe 90 may be disposed on the front side of the outer housing 11, the battery pack 80 may be mounted to the rear end of the outer housing 11, the operation device 25 may be mounted to the lower side of the outer housing 11, and air holes 18 may be formed in the left and right side portions of the outer housing 11 for allowing flow of air between inside and outside of the outer housing 11 as the stream of air is produced within the outer housing 11 by a fan (not shown) driven by the drive motor 30.

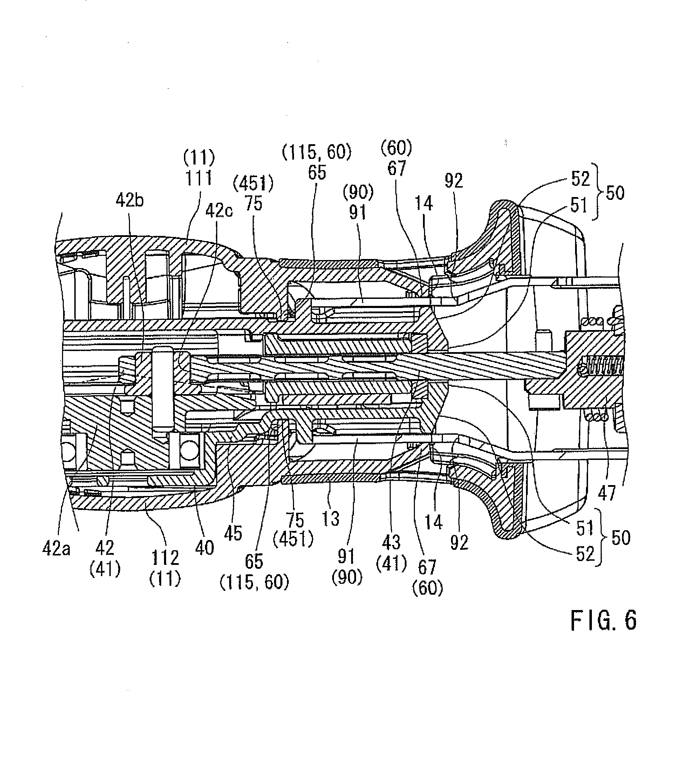

Further, as shown in FIGS. 1 and 3, cut powder discharge holes 14 may be formed in the left and right side portions 111 and 112 of the outer housing 11 at a position proximal to the front end of the outer housing 11. The discharge holes 14 may be through-holes communicating between inside and outside of the outer housing 11. During the cutting operation of a workpiece, cut powder or cut chips (hereinafter simply called "dust") of the workpiece may be produced by the cutting blade 95 at a portion on the front side of the outer housing 11. Because the outer housing has an open front end, the dust may flow rearwardly into the front portion of the outer housing 11. The discharge holes 14 may serve to discharge the dust from inside to outside of the outer housing 11. Further, as shown in FIGS. 3 and 6, the motion conversion unit 40 (more specifically, an accommodation housing 45 that will be explained later) includes a front surface 50 that may be opposed to a workpiece to be cut. The front surface 50 is inclined rearwardly from its central portion 51 toward its outer peripheral portion 52 in the left and right directions (see FIG. 6).

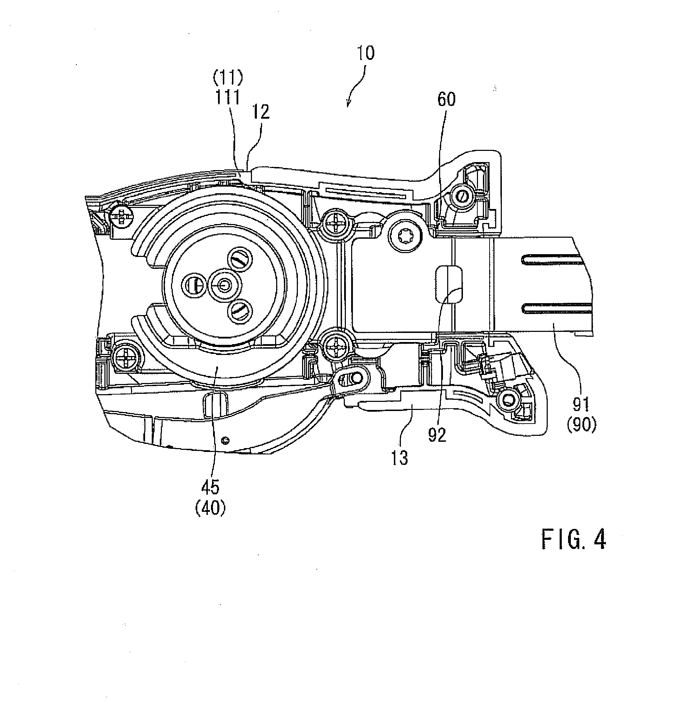

Referring to FIGS. 2 and 4, the shoe 90 has a function of positioning the cutting blade 95 relative to a workpiece to be cut. The shoe 90 may include right and left stays 91 and a shoe body 93. The right and left stays 91 are fixedly mounted to the tool body 100. The shoe body 93 defines a contact surface 94 for contacting with a workpiece. As shown in FIG. 3, the right and left stays 91 are positioned at the left and right side regions within the outer housing 11. More specifically, as show in FIG. 6, the right and left stays 91 are fixedly attached to the outer circumferential surface of the accommodation housing 45 by means of screws, so that the end portions of the right and left stays 91 closely contact with the outer circumferential surface of the accommodation housing 45 in surface-to-surface contact relationship therewith without producing substantial clearances. The stays 91 have through-holes 92 formed at positions opposed to the discharge holes 14 formed in the outer housing 11.

Due to the inclined configuration of the front surface 50 of the accommodation housing 45 that may be opposed to the workpiece to be cut, dust that may flow from the front side into inside of the outer housing 11 may flow from inside to the outside of the outer housing 11 via the through-holes 92 and the discharge holes 14 under the guide of the surface 50.

Each of the housing halves or the left and right outer housing portions 111 and 112 of the outer housing 11 is a one-piece member having a front end portion for supporting the shoe 90 and a rear end portion for mounting the battery pack 80. A portion of an outer circumferential surface 12 of the outer housing 11 is configured as an auxiliary grip portion 13. The auxiliary grip portion 13 may be covered by an elastomeric material layer molded integrally with the housing halves of the outer housing 11, so that the user can firmly grasp the auxiliary grip portion 13. In addition, the elastomeric material layer may improve the appearance of the auxiliary grip portion 13.

As shown in FIGS. 2 and 3, a power supply switch device 20, the drive motor 30 and the motion conversion unit 40 are disposed within the outer housing 11 and are arranged in this order from the rear side to the front side. In order to receive the power supply switch device 20 in addition to the drive motor 30 and the motion conversion unit 40, the outer housing 11 is configured to have a configuration elongated in the forward and rearward direction. In other words, the outer housing has a longitudinal axis in the forward and rearward direction. The longitudinal axis may be parallel to a drive shaft 32 of the drive motor 30. The rear end of the outer housing 11 includes battery mount portion 15 for mounting the battery pack 80. The outer surface of the battery mount portion 15 is configured as a grip portion 16 that can be grasped by the user. Therefore, the outer housing 11 is elongated also for forming the grip portion 16 at the rear end.

The components disposed within the outer housing 11 will be further described. Referring to FIGS. 2 and 3, the power supply switch device 20 is operable to be turned on and off for permitting and stopping the supply of the electric power from the battery pack 80 mounted to the battery mount portion 15 to the drive motor 30. More specifically, the power supply switch device 20 includes the operation device 25 and a switch body 21, so that the switch body 21 is turned on and off according to the operation of the operation device 25. The operation device 25 may include a first operation member 251 configured as a trigger and a second operation member 252 configured as a grip. The switch body 21 may be turned on when either one of the first and second operation members 251 and 252 is pushed. When either one of the first and second operation members 251 and 252 is released from the pushed position to return to the original position, the switch body 21 is turned off. To this end, the switch body 21 may include a sensing unit (not shown) for detecting the operational positions of the first and second operation members 251 and 252 and a control unit or a switching unit (not shown) for connecting and disconnecting between the battery pack 80 and the drive motor 30 according to the operational positions of the first and second operation members 251 and 252.

The drive motor 30 may be disposed on the front side of the switch body 21. The drive motor 30 may be a DC motor having a field coil as a stator, an armature as a rotor, and carbon brushes (not shown). An annular housing 31 may be disposed on the outer circumferential side of the field coil and may support the above components of the motor. The armature and the commutator are fixedly mounted to a drive shaft 32 that is rotatably supported by a bearing 33.

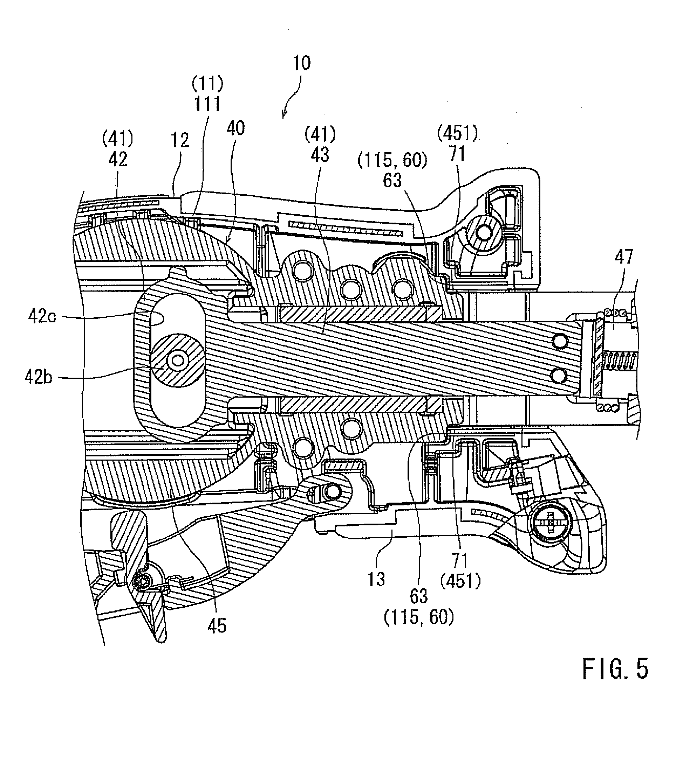

The motion conversion unit 40 is disposed on the front side of the drive motor 30 so as to be positioned proximal to and aligned with the drive motor 30 along the axial direction of the drive shaft 32. The motion conversion unit 40 may include a motion conversion assembly 41 and the accommodation housing 45. The accommodation housing 45 may support the motion conversion assembly 41 and receive the same therein. The motion conversion assembly 41 may include a motion conversion mechanism 42 and the reciprocating rod 43, so that the motion conversion mechanism 42 converts the rotation of the drive shaft 32 into the reciprocating movement of the reciprocating rod 43. The accommodation housing 45 may be a metal-formed product and may movably support the motion conversion mechanism 42 and slidably support the reciprocating rod 43 in the axial direction. The motion conversion mechanism 42 may include a bevel gear 42a, a roller 42b mounted to the bevel gear 42a, and a slot 42c formed in the rear end portion of the rod 43. The bevel gear 42a is supported within the accommodation housing 45 so as to be rotatable about an axis extending in the left and right direction as viewed in FIGS. 3 and 5. The bevel gear 42a engages a pinion gear 32a formed on the drive shaft 32, so that the bevel gear 42a rotates as the drive shaft 32 rotates. The roller 42b is mounted to the bevel gear 41a at a position offset from the rotational axis of the bevel gear 42a, so that the roller 42b performs an orbital motion about the rotational axis of the bevel gear 42a. As the roller 42b performs the orbital motion, the movement in the forward and rearward direction of the roller 42b may be transmitted to the rod 43 via the slot 42c, while the movement of the roller 42b may not be transmitted to the rod 43 because the roller 42b moves along the slot 42c. In this way, the rotation of the drive shaft 32 is converted into the reciprocating movement of the rod 43 in the forward and rearward direction.

As shown in FIGS. 5 and 6, the tool body 100 of the cutting tool 1 is provided with a dust preventing device 60 for preventing dust from flowing from the front side to the rear side of the accommodation housing 45 via a space that may be formed between the accommodation housing 45 and the outer housing 11. Therefore, the dust preventing device 60 may prevent powder dust from flowing from the front side of the motion conversion unit 40 to reach the drive motor 30. As shown in FIG. 5, the dust preventing device 60 may include two first ribs 63 and two stepped portions 71. The first ribs 63 are formed on the outer housing 11 and the stepped portions 71 are formed on the accommodation housing 45. The first ribs 63 and the stepped portions 71 are positioned to be opposed to each other in the direction of the width of the rod 43. The first ribs 63 and the stepped portions 71 closely contact with each other, so that no substantial clearances are formed therebetween. The first ribs 63 protrude inwardly from an inner circumferential surface 115 of the outer housing 11. The stepped portions 71 are formed at the front end of an outer circumferential surface 451 of the accommodation housing 45. Thus, the first ribs 63 are formed to support the accommodation housing 45 at the stepped portions 71 in surface-to-surface contact relationship therewith. Therefore, it is possible to reliably prevent dust from flowing into the space between the outer housing 11 and the accommodation housing 45 and further into the region of the drive motor 30. Each of the first ribs 63 may have a width in a direction perpendicular to the sheet of FIG. 5.

As shown in FIG. 6, the dust preventing device 60 may include two second ribs 65 formed on the outer housing 11 and two contact portions 75 formed on the accommodation housing 45. The second ribs 65 and the contact portions 75 are opposed to each other and closely contact with each other, so that no substantial clearances are formed therebetween. The second ribs 65 protrude inwardly from the inner circumferential surface 115 of the outer housing 11. The contact portions 75 are formed at the outer circumferential surface 451 of the accommodation housing 45. Thus, the second ribs 65 are formed to support the accommodation housing 45 at the contact portions 75 in surface-to-surface contact relationship therewith. Therefore, it is possible to further reliably prevent powder dust from flowing into the space between the outer housing 11 and the accommodation housing 45 and further into the region of the drive motor 30.

As shown in FIG. 6, the dust preventing device 60 may further includes two third ribs 67 protruding inwardly from the inner circumferential surface 115 of the outer housing 11. The third ribs 67 are formed at positions opposed to each other in the direction of thickness of the rod 43 and closely contact the outer surfaces of the stays 91 of the shoe 90 in surface-to-surface contact relationship therewith, so that no substantial clearances are formed between the third ribs 67 and the stays 91. As described previously, the stays 91 closely contact the outer circumferential surface of the accommodation housing 45. Therefore, it is possible to further reliably prevent dust from flowing into the space between the outer housing 11 and the accommodation housing 45 and further into the region of the drive motor 30. Each of the third ribs 67 may have a width in a direction perpendicular to the sheet of FIG. 6. Therefore, as viewed from the front side, the first ribs 63 and the third ribs 67 are spaced from each other in the circumferential direction of the outer housing 11. However, the first ribs 63 and the third ribs 67 may be formed in continuous with each other in the circumferential direction.

According to the cutting tool 10 of this embodiment, on the outer circumferential side of the accommodation housing 45, there is provided the outer housing 11 that extends in the forward and rearward direction for receiving at least the motion conversion unit 40 and the drive motor 30. Therefore, each of the left and right outer housing portions 111 and 112 may be formed as a one-piece member elongated to a position for receiving the drive motor 30. Therefore, it is possible to improve the appearance of the outer housing 11 and to minimize the number of parts of the outer housing 11, leading to decrease in the manufacturing cost. Further, the dust preventing device 60 is provided between the accommodation housing 45 and the outer housing 11 for preventing dust from flowing from the front side of the motion conversion unit 40 to the region where the drive motor 30 is positioned.

In addition, the outer housing 11 is extended further rearward from the position for receiving the drive motor 30 to a position for receiving the power supply switch device 20. Therefore, it is possible to further improve the appearance of the outer housing 11 and to further minimize the number of parts of the housing 11, leading to further decrease in the manufacturing cost.

Further, the outer housing 11 is extended further rearward from the position for receiving the power supply switch device 20 to a position where the grip 16 is formed. Also in this respect, it is possible to further improve the appearance of the outer housing 11 and to further minimize the number of parts of the outer housing 11.

Furthermore, the dust preventing device 60 includes the first ribs 63, the second ribs 65 and the third ribs 67 that protrude inwardly from the inner circumferential surface 115 of the outer housing 11 toward the accommodation housing 45 and directly or indirectly contact with the outer circumferential surface 451 of the accommodation housing 45 for sealing between the inner circumferential surface 115 of the outer housing 11 and the outer circumferential surface 451 of the accommodation housing 45. Because the first ribs 63, the second ribs 65 and the third ribs 67 are formed integrally with the outer housing 11, it is possible to easily incorporate the dust preventing device 60. Hence, it is possible to prevent dust from reaching to the region of the drive motor 30 without need of additional components. This may further reduce the manufacturing cost.

Furthermore, the outer housing 11 is made of resin and is spitted into the left and right outer housing portions 111 and 112 that are joined together. The left and right outer housing portions 111 and 112 may have configurations symmetrical with each other. Therefore, the operation for forming the outer housing 11 can be simplified. Hence, the operation for assembling the necessary components within the outer housing 11 can be simplified, so that the operation for manufacturing the cutting tool 10 can be efficiently performed.

Furthermore, because the discharge holes 14 are formed in the outer housing 11 for communicating between inside and outside of the outer housing 11, dust that may flow from the front side of the outer housing 11 into inside of the outer housing 11 can be discharged to the outside through the discharge holes 14. Therefore, it is possible to prevent potential clogging of powder dust within the front portion of the outer housing 11, so that it is possible to further reliably prevent powder dust from reaching to the region of the drive motor 30.

Furthermore, the front surface 50 of the motion conversion unit (i.e., the front surface of the accommodation housing 45) is inclined rearwardly from its central portion 51 toward its outer peripheral portion 52 in the left and right directions. Therefore, powder dust flowing into the front portion of the outer housing 11 can be directed toward the discharge holes 14, so that the powder dust can be effectively discharged from within the outer housing 11.

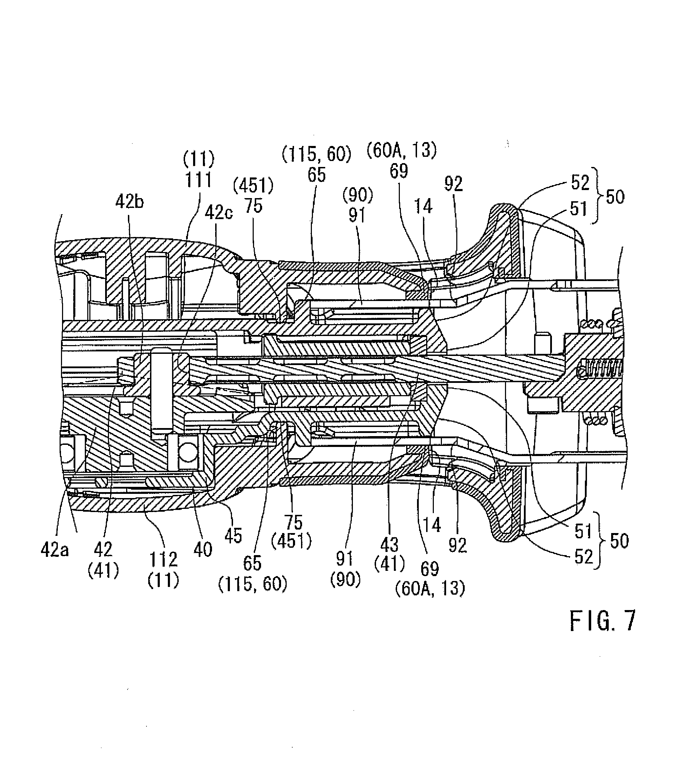

The above representative embodiment may be modified in various ways. For example, the dust preventing device 60 for preventing powder dust from reaching to the region of the drive motor 30 may be modified as shown in FIG. 7, in which a dust preventing device 60A for preventing powder dust from reaching to the region of the drive motor 30 includes third ribs 69 that correspond to the third ribs 67. Similar to the third ribs 67, the third ribs 69 protrude inwardly from the inner circumferential surface 115 of the outer housing 11. However, the third ribs 69 are not formed integrally with the outer housing 11 but are formed integrally with the elastomeric material layer that covers the auxiliary grip 13. The third ribs 69 are formed to cover the front portion of the inner circumferential surface 115 by a given distance in the forward and rearward direction, so that the contact areas of the third ribs 69 with the stays 91 of the shoe 90 are larger than those of the third ribs 67. Therefore, the third ribs 69 can further reliably seal against the stays 91. In addition, because the third ribs 69 elastically contact the stays 91, the third ribs 69 can further reliably seal against the stays 91, and eventually, it is possible to further reliably seal between the inner circumferential surface 115 of the outer housing 11 and the outer circumferential surface 451 of the accommodation housing 45.

The elastomeric material layer of the auxiliary grip 13 may preferably be made of synthetic rubber having both electrical and thermal insulation properties, however, the elastomeric material layer may be made of any other elastomeric material, such as natural rubber.

Further, the above teachings may be also applied to a jigsaw or any other power tool having a motion conversion unit for converting the motion of a drive motor into a different motion from that of the motor.

Further, the motion conversion assembly 41 of the motion conversion unit 40 may be replaced with any other motion conversion mechanism that can convert the motion of a drive motor into a different motion from that of the motor.

Furthermore, although the accommodation housing 45 of the motion conversion unit 40 of the above embodiment is configured to support and receive all the components of the motion conversion assembly 41 including the motion conversion mechanism 42 and the reciprocating rod 43, the accommodation housing 45 may support and receive only the motion conversion mechanism 42 or only the reciprocating rod 43. Thus, it is possible to configure the accommodation housing 45 such that the accommodation housing 45 supports and receives only a part of the motion conversion assembly 41.

Furthermore, the ribs 63, 65 and 67(69) protruding from the inner circumferential surface 115 of the outer housing 11 toward the accommodation housing 45 are not necessary to contact the outer circumferential surface 451 of the accommodation housing 45. For example, one or any of the ribs 63, 65 and 67(69) may be spaced from the outer circumferential surface 451 by a small distance.

Furthermore, although each of the ribs 63 (65, 67(69)) extends along a part of the circumferential length of the inner circumferential surface 115 of the outer housing 11, it may be possible to replace the ribs 63 (65, 67(69)) with a single flange extending throughout the circumferential length of the inner circumferential surface 115. In such a case, it may be possible to more reliably prevent dust from reaching to the region of the drive motor 30. Further, the ribs may be replaced with any other portions having shapes different from rib shapes.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A cutting tool (1) comprising:
a drive device (30) outputting a first motion;
a cutting blade (95);
a motion conversion unit (40) configured to convert the first motion of the drive device (30) into a second motion of the cutting blade (95) for cutting a workpiece;
an outer housing (11) configured to receive the motion conversion unit (40) and the drive device (30) therein,
wherein the outer housing (11) has a first side and a second side opposite to the first side along a longitudinal direction of the outer housing (11);
wherein the cutting blade (95) is disposed on the first side with respect to the motion conversion unit (40) and the drive device (30) is disposed on the second side with respect to the motion conversion unit (40); and
a dust preventing device (60) configured to prevent dust from flowing from a front side to a rear side with respect to the motion conversion unit (40) via a space between the outer housing (11) and the motion conversion unit (40).

2. The cutting tool (1) as in claim 1, wherein:
the drive device is a drive motor (30); and
the motion conversion unit (40) includes a motion conversion assembly (41) and an accommodation housing (45) configured to receive the motion conversion assembly (41) therein; and
the dust preventing device (60) is disposed between the accommodation housing (45) and the outer housing (11).

3. The cutting tool (1) as in claim 2, wherein:
the drive motor (30) has a drive shaft (32) moving in the first motion; and
the lengthwise direction of the outer housing (11) is substantially parallel to the drive shaft (32).

4. The cutting tool (1) as in claim 2 or 3, wherein the drive motor (30) is an electric motor.

5. The cutting tool (1) as in claim 4, wherein the cutting tool (1) further includes a battery pack (80) mounted to one end of the outer housing (11) on the second side for supplying an electric power to the electric motor (30).

6. The cutting tool (1) as in claim 4 or 5, further comprising a switch device (20) disposed on the second side with respect to the electric motor (30), wherein the outer housing (11) is extended to also receive the switch device (20) therein.

7. The cutting tool (1) as in claim 6, wherein the outer housing (11) comprises a grip (16) disposed at a position on the second side of the switch device (20) and configured to be grasped by a hand of a user.

8. The cutting tool (1) as in any one of claims 2 to 7, wherein the dust preventing device (60) comprises at least one rib (63, 65, 67; 69) formed on an inner circumferential surface (115) of the outer housing (11) and protruding toward an outer circumferential surface (451) of the accommodation housing (45).

9. The cutting tool (1) as in claim 8, wherein an elastomeric material layer is formed on the outer circumferential surface (451) of the outer housing (11), and wherein the elastomeric material layer includes a portion covering a part of the inner circumferential surface (115) of the outer housing (11), and the at least one rib (69) is formed by the portion of the elastomeric material layer.

10. The cutting tool (1) as in claim 8 or 9, wherein the dust preventing device (60) comprises a plurality of ribs (63, 65, 67; 69) spaced from each other along a direction of the length of the space between a front end and a rear end of the space positioned on the first side and the second side, respectively.

11. The cutting tool (1) as in any one of the preceding claims, wherein the outer housing (11) is made of resin and includes housing halves (111, 112) that are joined to each other.

12. The cutting tool (1) as in any one of the preceding claims, wherein the outer housing (11) includes at least one discharge hole (14) formed in the outer housing (11) and communicating between inside and outside thereof, so that dust flowing into the outer housing (11) can be discharged from inside to the outside of the outer housing (11) through the at least one discharge hole (14).

13. The cutting tool (1) as in claim 12, wherein the motion conversion unit (40) includes a front surface (50) disposed on the first side and opposed to a workpiece to be cut, wherein the front surface (50) is inclined rearwardly from a central portion toward an outer peripheral portion of the front surface (50), so that dust flowing into the outer housing (11) can be directed toward the at least one discharge hole (14).

14. The cutting tool (1) as in any one of the preceding claims, wherein the space has a front end positioned on the first side and opened to the outside and a rear end positioned on the second side and opened into a region where the drive device (30) is disposed.

15. The cutting tool (1) as in claim 14, wherein the accommodation housing (45) has a front portion on the first side, and the front end of the space is defined between an inner circumferential surface (115) of the outer housing (11) and an outer circumferential surface (451) of the accommodation housing (45) at the front portion of the accommodation housing (45).
